# EUROPÄISCHE PATENTSCHRIFT

(11) **EP 1 685 924 B1**
(45) Veröffentlichungstag und Bekanntmachung des Hinweises auf die Patenterteilung: **18.04.2007**
(21) Anmeldenummer: 06100509.6
(22) Anmeldetag: 18.01.2006
(51) Int. Cl.: B23Q 11/08

(54) **Sammeltrog für eine Werkzeugmaschine**
Collecting trough for a machine tool
Bac de collection destiné à une machine-outil

(30) Priorität: 26.01.2005 DE 202005001316 U
(43) Veröffentlichungstag der Anmeldung: 02.08.2006
(73) Patentinhaber: MANN+HUMMEL GmbH, 71638 Ludwigsburg (DE)
(72) Erfinder: Reynders, Luc, 3770 Riemst (BE)

(56) Entgegenhaltungen:
- EP-A- 0 949 044
- WO-A-01/71223
- DE-A1- 10 136 558
- US-A1- 2001 011 055

## Beschreibung

### Technisches Gebiet

Die Erfindung betrifft einen Sammeltrog für eine Werkzeugmaschine, enthaltend Kühlmittelsprühdüsen, welche Kühlmittelströme auf Schneidwerkzeuge und benachbarte Oberflächen richten, nach dem Oberbegriff des Patentanspruches 1.

### Stand der Technik

Eine Werkzeugmaschine mit den genannten Merkmalen ist aus der EP 0949044 B zu entnehmen. Diese Werkzeugmaschine, welche der spanenden Bearbeitung von Werkstücken dient, weist eine Vielzahl von Kühlmittelsprühdüsen auf. Beim Bearbeiten von Werkstücken müssen sowohl die Kühlmittelströme als auch die mit diesen Kühlmittelströmen mitgeschwemmte Späne abtransportiert werden. Hierzu ist unterhalb der Werkzeugmaschine ein Sammeltrog angeordnet, der das Kühlmittel und die Späne aufnimmt. Im Sammeltrog oder unterhalb des Sammeltroges befindet sich eine Transporteinrichtung, welche dafür geeignet ist, Kühlmittel und Späne einer Filtrationseinrichtung zuzuführen. Damit kein Kühlmittel zwischen Werkzeugmaschine und Sammeltrog austreten kann und auch keine Späne außerhalb des Sammeltroges gelangen können, weist dieser Sammeltrog eine aufblasbare Dichtung auf, die zwischen den oberen Enden von Seiten des Sammeltroges und unteren Oberflächen der Werkzeugmaschine angeordnet ist. Zur Anpassung der Kontur kann die Dichtung variabel aufgeblasen werden.

Ein Nachteil bei diesem System ist darin zu sehen, dass ein Hilfsstoff in Form von Druckluft erforderlich ist, um diese Dichtung aufzublasen und die Dichtwirkung zu erzielen. Außerdem muss gewährleistet sein, dass beim Betrieb einer Werkzeugmaschine das Dichtungsprofil nicht zerstört wird und dadurch Luft entweicht.

Der Erfindung liegt die Aufgabe zugrunde, die genannten Nachteile zu vermeiden und eine Anordnung zu schaffen, die einen Sammeltrog dichtend an eine Werkzeugmaschine adaptiert.

### Offenbarung der Erfindung

Diese Aufgabe wird dadurch gelöst, dass der Sammeltrog zwischen dem oberen Ende seiner Seiten und den unteren Oberflächen einer Werkzeugmaschine ein Dichtsystem aus Schaumdichtungswerkstoff aufweist, um zwischen diesen vorhandene Spalten zu verschließen und wobei der Sammeltrog eine Einrichtung zur Höhenverstellbarkeit aufweist.

Der wesentliche Vorteil der Erfindung liegt darin, dass zur zuverlässigen Abdichtung des Sammeltroges an der Werkzeugmaschine keine zusätzlichen Hilfsstoffe benötigt werden. Außerdem besteht die Möglichkeit, durch eine Anpassung des Schaumdichtungswerkstoffes, d.h. eine bestimmte Formgebung - auch unterschiedliche Höhen bzw. Absätze - und Strukturen der Werkzeugmaschine auszugleichen, so dass eine zuverlässige Abdichtung gewährleistet ist.

Weiterbildungsgemäß erfolgt die Höhenverstellung des Sammeltroges hydraulisch oder mechanisch. Zweckmäßigerweise ist die Höhenverstellung am Boden des Sammeltroges angeordnet. Es besteht auch die Möglichkeit, im Dichtungsbereich eine Höhenverstellung vorzusehen. So kann die Höhenverstellung beispielsweise über einen dehnbaren Balg vorgenommen werden.

Weiterbildungsgemäß ist der Sammeltrog verfahrbar unter der Werkzeugmaschine angeordnet, so dass eine Reinigung auch außerhalb der Werkzeugmaschine erfolgen kann.

Der Schaumdichtungswerkstoff ist weiterbildungsgemäß ein Nitril- oder Butadien-Kautschuk, der eine geschlossene Zellstruktur aufweist und eine gute Abdichtung sowie eine hohe Elastizität besitzt. Die Dichte liegt zweckmäßigerweise in einem Bereich von 100 bis 300 kg/m³. An der Werkzeugmaschine ist für die Anlage des Schaumdichtungswerkstoffes ein umlaufendes Blech vorgesehen, wobei dieses Blech hinsichtlich seiner Dichtfläche in einer Ebene verläuft und damit unterschiedliche Höhenprofile der Werkzeugmaschine ausgleichen kann.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Die Erfindung wird nachfolgend anhand eines Ausführungsbeispiels näher erläutert. Es zeigt
- Figur 1: eine Werkzeugmaschine mit der schematischen Darstellung ihres Untergestells,
- Figur 1a: einen vergrößerten Ausschnitt x der Figur 1,
- Figur 2: die in Figur 1 gezeigte Werkzeugmaschine mit angekoppeltem Sammeltrog,
- Figur 2a: einen vergrößerten Ausschnitt y der Figur 2, und
- Figur 3: eine Detaildarstellung eines scherenartig wirkenden Fußes für den Sammeltrog.

### Ausführungsform(en) der Erfindung

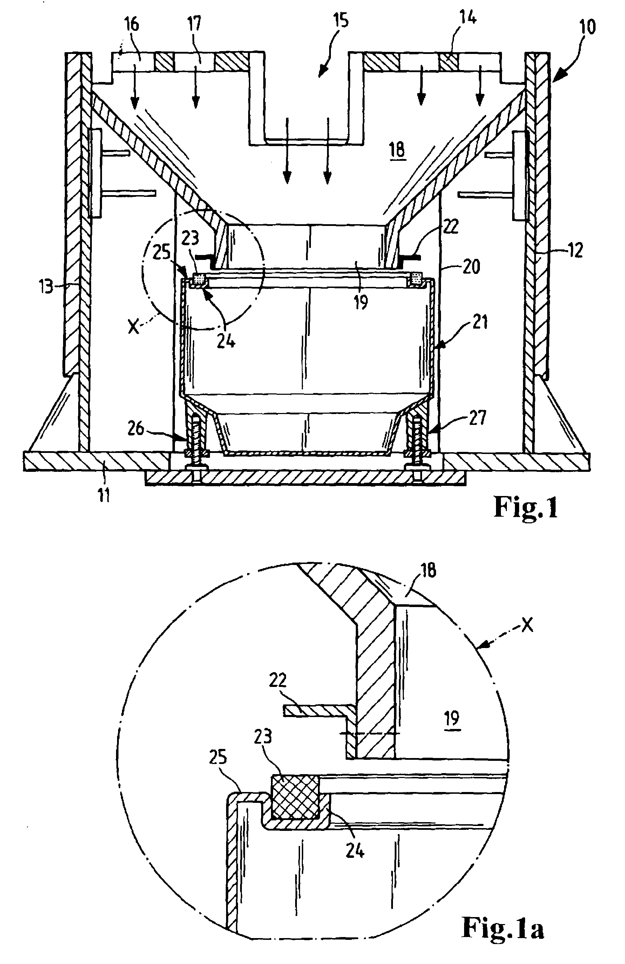

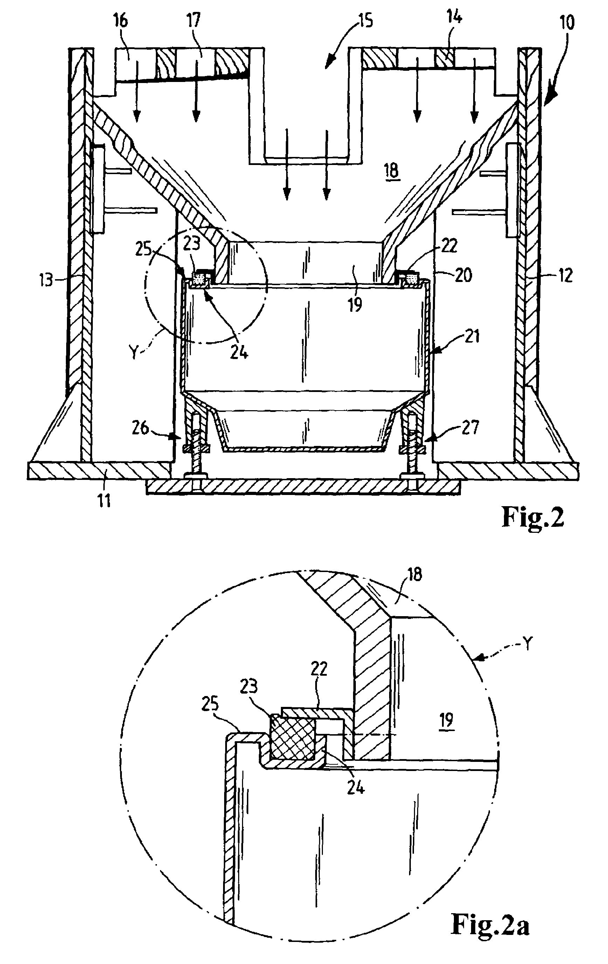

Gemäß Figur 1 weist das Untergestell 10 der hier nicht vollständig dargestellten Werkzeugmaschine eine Bodenplatte 11 auf. Von der Bodenplatte ausgehend sind Fußgestelle 12, 13 vorgesehen, die einen Arbeitstisch 14 tragen. Oberhalb dieses Arbeitstisches findet ein Bearbeitungsvorgang für die spanende Bearbeitung von Werkstücken statt. Das bei der spanenden Bearbeitung erforderliche Kühlmittel fließt über die innere Öffnung 15 nach unten. Ebenso kann Kühlmittel über Öffnungen 16, 17 des Arbeitstisches 14 abfließen. Mit dem Kühlmittel werden auch die Späne abtransportiert und gelangen in einen Sammeltrichter 18, der einen verengten Auslass 19 aufweist. Unterhalb des Auslasses 19 ist ein Raum 20 zur Aufnahme eines Sammeltroges 21 vorgesehen. In der in Figur 1 bzw. 1a gezeigten Stellung ist der Sammeltrog noch nicht an die Werkzeuge adaptiert, sondern weist einen axial gerichteten Abstand zu einem Dichtrand 22 in Form eines umlaufenden Bleches am Auslass 19 der Werkzeugmaschine auf. Der Sammeltrog selbst trägt an seinem oberen Ende eine Profildichtung 23, die aus einem Schaumdichtungswerkstoff besteht. Diese Profildichtung ist in einem Rahmen 24 des oberen Sammeltrograndes 25 angeordnet. Der Sammeltrog steht auf höhenverstellbaren Füßen 26, 27. Zur Adaptierung des Sammeltroges ist gemäß Figur 2 dieser über die Höhenverstellung der Füße nach oben zu bewegen. Dadurch legt sich die Profildichtung 23 an dem Dichtrand 22 an und bewirkt eine zuverlässige Abdichtung (siehe auch Figur 2a). Außerdem bewirkt die Höhenverstellbarkeit des Sammeltroges ein höheres Niveau dessen Bodens, so dass ein gutes Abfließen des darin befindlichen Kühlmittels gewährleistet wird.

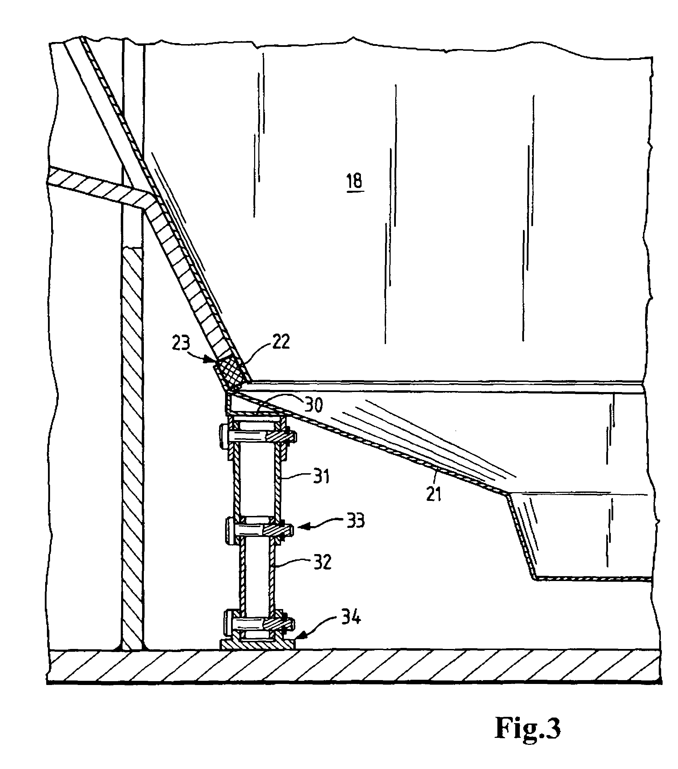

Figur 3 zeigt eine Detaildarstellung eines scherenartig wirkenden Fußes für den Sammeltrog 21. An dem Sammeltrog befindet sich im Kontaktbereich zu dem Dichtrand 22 die Profildichtung 23 auf einem L-förmigen Trägerprofil 30. Dieses L-förmige Trägerprofil ist an einem oberen Gelenkarm 31 angeordnet. Der obere Gelenkarm ist drehbeweglich mit einem unteren Gelenkarm 32 verbunden. Die Beweglichkeit erfolgt durch ein zwischengeschaltetes Lager 33. Auf der hier gezeigten Seite sind zwei solcher Füße angeordnet. Durch eine horizontale Bewegung des Lagers 33 knicken die Füße/Gelenkarme 31, 32 ab bzw. stellen sich auf. Am Fußgrund ist ein Lagerschuh 34 vorgesehen, der ebenfalls beweglich an dem unteren Gelenkarm 32 angeordnet ist. Diese Version hat den Vorteil, dass einerseits eine präzise Anpassung der Sammeltrogposition an den Dichtrand der Maschine erfolgt, andererseits der Sammeltrog aufgrund des Klappmechanismus der daran angeordneten Füße - im Normalfall zwei Paare - nur eine geringe Bauhöhe aufweist.

## Patentansprüche

1. Werkzeugmaschine mit einem Sammeltrog, enthaltend Kühlmittelsprühdüsen, welche Kühlmittelströme auf Schneidwerkzeuge und benachbarte Oberflächen richten, wobei dieser Sammeltrog nach oben offen und unterhalb der Sprühdüsen angeordnet ist und nach unten abfließendes Kühlmittel aufnimmt, **dadurch gekennzeichnet, dass** der Sammeltrog zwischen dem oberen Ende seiner Seiten und den unteren Oberflächen einer Werkzeugmaschine ein Dichtungssystem (22, 23) aus Schaumdichtungswerkstoff aufweist, um zwischen diesem vorhandene Spalten zu verschließen und wobei der Sammeltrog eine Einrichtung zur Höhenverstellbarkeit aufweist.

2. Werkzeugmaschine nach Anspruch 1 , **dadurch gekennzeichnet, dass** die Höhenverstellung hydraulisch oder mechanisch erfolgt und am Boden des Sammeltroges angeordnet ist.

3. Werkzeugmaschine nach den Ansprüchen 1 und 2, **dadurch gekennzeichnet, dass** der Sammeltrog verfahrbar unter der Werkzeugmaschine angeordnet ist.

4. Werkzeugmaschine nach einem der vorherigen Ansprüchen, **dadurch gekennzeichnet, dass** der Schaumdichtungswerkstoff ein NBR mit einer geschlossenen Zellstruktur ist sowie eine Dichte im Bereich von 100 bis 300 kg/^{m3} aufweist und Wasser absorbierend ist.

5. Werkzeugmaschine nach einem der vorherigen Ansprüchen, **dadurch gekennzeichnet, dass** zur Abdichtung ein Dichtrand (22) in Form eines umlaufenden Bleches vorgesehen ist, welches als Winkelblech gestaltet ist, wobei ein Schenkel mit der Werkzeugmaschine verbunden ist und der weitere Schenkel die Dichtungsanlagefläche bildet.

## Claims

1. Machine tool with a collecting trough, the said machine tool including coolant spray nozzles that direct streams of coolant onto cutting tools and adjacent surfaces, wherein the said collecting trough is open at the top and is disposed underneath the spray nozzles and accommodates coolant that drains away downwards, **characterised in that** between the top end of the sides of the said collecting trough and the bottom surfaces of a machine tool, the collecting trough includes a sealing system (22, 23) that is produced from foam sealing material in order to seal gaps between the said collecting trough and the machine tool and wherein the collecting trough includes a device providing vertical adjustability.

2. Machine tool according to claim 1, **characterised in that** the vertical adjustment is effected in a hydraulic manner or in a mechanical manner and the means are disposed on the bottom of the collecting trough.

3. Machine tool according to claims 1 and 2, **characterised in that** the collecting trough is disposed underneath the machine tool so as to be displaceable.

4. Machine tool according to one of the preceding claims, **characterised in that** the foam sealing material is an NBR (nitrile rubber) with a closed cell structure and has a density in the range of 100 to 300 kg/m³ and is water-absorbent.

5. Machine tool according to one of the previous claims, **characterised in that**, for sealing purposes, a sealing edge (22) is provided in the form of a circumferential sheet, the said sheet being in the form of angled sheet metal, wherein one portion is connected to the machine tool and the other portion forms the sealing face.

## Revendications

1. Machine-outil avec bac de collecte, contenant des buses de pulvérisation de liquide de refroidissement, qui dirigent des jets de liquide de refroidissement sur des outils de coupe et des surfaces voisines, ce bac de collecte étant ouvert vers le haut et étant disposé en dessous des buses de pulvérisation et recevant le liquide de refroidissement qui s' écoule vers le bas,
**caractérisée en ce que**
le bac de collecte présente, entre l'extrémité supérieure de ses côtés et les surfaces inférieures d' une machine-outil, un système d' étanchéité (22, 23) composé de matériau d' étanchéité en mousse, afin d' obturer les fentes présentes entre les éléments, le bac de collecte présentant un dispositif de réglage en hauteur.

2. Machine-outil selon la revendication 1,
**caractérisée en ce que**
le réglage en hauteur s' effectue hydrauliquement ou mécaniquement et est disposé au fond du bac de collecte.

3. Machine-outil selon les revendications 1 et 2,
**caractérisée en ce qu'**
on dispose le bac de collecte de façon mobile sous la machine-outil.

4. Machine-outil selon l'une des revendications précédentes,
**caractérisée en ce que**
le matériau d' étanchéité en mousse est un NBR avec une structure cellulaire fermée, présentant une densité dans la plage de 100 à 300 kg/m³ et absorbant l'eau.

5. Machine-outil selon l'une des revendications précédentes,
**caractérisée en ce que**
pour réaliser l'étanchéité, on prévoit un bord d' étanchéité (22) sous la forme d' une tôle périphérique, conçue sous forme de tôle cornière, une branche étant reliée à la machine-outil et l'autre branche formant la surface d' appui du joint d' étanchéité.
